# EUROPEAN PATENT APPLICATION

(11) **EP 4 653 315 A1**
(43) Date of publication of application: **26.11.2025**
(21) Application number: 24425019.7
(22) Date of filing: 24.05.2024
(51) Int. Cl.: B64C 29/00, B64C 39/12, B64U 10/20, B64U 30/297

(54) **CONVERTIBLE AIRCRAFT CAPABLE OF HOVERING**

(71) Applicant: Leonardo S.p.a., 00195 Roma (IT)
(72) Inventor: Bianco Mengotti, Riccardo, 21017 Samarate (VA) (IT); Caccetta, Luca, 21017 Samarate (VA) (IT); Sampugnaro, Luca, 21017 Samarate (VA) (IT); Palermo, Marco, 21017 Samarate (VA) (IT); Donini, Nicola, 21017 Samarate (VA) (IT)
(74) Representative: Studio Torta S.p.A.

(57) **Abstract**

There is described a convertible aircraft (1, 1', 1", 1‴, 1ʺʺ, 1‴ʺ, 1‴‴ 1‴‴) comprising a structure (2) comprising, in turn, a nose (4) and a tail (5); a pair of half-wings (3); a first and a second rotor (20a, 20b) respectively rotatable around a third and fourth axis (B, C); a third and a fourth rotor (21a, 21b) respectively rotatable around a fifth and sixth axis (D, E); and a fifth and a sixth rotor (22a, 22b) carried by respective half-wings (3) and respectively rotatable around a seventh and eighth axis (F, G) with respect to the structure (2); the aircraft (1, 1', 1", 1‴, 1ʺʺ, 1‴ʺ, 1‴‴ 1‴‴) is switchable between a first hovering or taking off/landing flight configuration wherein the seventh and eighth axis (F, G) are arranged transversely to the first axis (Y); and a second forward flight configuration wherein the seventh and eighth axis (F, G) are arranged parallel to the first axis (Y); the first and second rotor (20a, 20b) are carried by respective half-wings (3); the seventh and eighth axis (F, G) are arranged offset with respect to the third and fourth axis (B, C) along the first axis (Y), the aircraft ((1, 1', 1", 1‴, 1ʺʺ, 1‴ʺ, 1‴‴ 1‴‴) comprises a centre of gravity (W) interposed between the seventh and eighth axis (F, G) and the third and fourth axis (B, C).

## Description

The present invention relates to a convertible aircraft, i.e., an aircraft that is switchable between a first hovering flight configuration, or of flight along a mainly vertical trajectory, and a second forward or cruising flight configuration.

In the aviation sector, aeroplanes are normally used for high cruising speeds, in particular greater than 150 knots and high altitudes, e.g., above 30,000 feet. At cruising speeds and high altitudes, aeroplanes use fixed wings to generate the lift necessary to sustain the plane. A sufficient value of this lift can only be obtained by accelerating the aeroplane on runways of considerable length. These runways are also necessary to allow the aeroplanes to land.

Conversely, helicopters normally have lower cruising speeds than aeroplanes and generate the necessary lift for sustenance through rotation of the main rotor blades. Consequently, helicopters can land/take off without the need for a horizontal speed and using particularly small surfaces. Moreover, helicopters are capable of hovering and of flying at relatively low altitudes and speeds, in this way being particularly manoeuvrable and suitable for demanding manoeuvres, such as those required to rescue people in the mountains or at sea.

Regardless of this, helicopters have intrinsic limitations in terms of maximum operating altitude, which is around 20000 feet, and maximum operating speed, which cannot exceed 150 knots.

In order to meet the demand for aircraft capable of having the manoeuvrability and flexibility of use of the helicopter and at the same time overcoming the aforementioned intrinsic limits, convertiplanes are known, which constitute a type of convertible aircraft.

An example of convertiplane is described in the patent application US-B-10,011,349.

In more detail, the convertiplane described in the aforesaid application essentially comprises:
- a fuselage extending along a first longitudinal axis; and
- a wing projecting cantilevered and formed by a pair of half-wings arranged on respective mutually opposite sides of the fuselage, and each having respective free ends opposite the fuselage and aligned along a second transverse axis substantially orthogonal to the first longitudinal axis.

The convertiplane further comprises:
- a pair of nacelles housing the respective engines; and
- a pair of rotors rotatable around respective third axes and operatively connected to respective engines.

The rotors are inclinable with respect to the wing around a fourth axis, preferably parallel to the second axis.

Convertiplanes are also capable of selectively assuming:
- the first "helicopter" configuration, wherein the rotors are arranged with the respective third axes substantially vertical and orthogonal to the first axis of the convertiplane and orthogonal to the respective engines; or
- the second "aeroplane" configuration, wherein the rotors are arranged with respective third axes substantially parallel to the first axis of the convertiplane and coaxial to the respective engines.

Recently, numerous proposals of convertible aircraft with hybrid or completely electrical propulsion systems have been developed.

Among these, the patent application WO-A-2020/105045 describes a convertible aircraft essentially comprising:
- a structure elongated according to a longitudinal direction of the aircraft;
- a pair of half-wings projecting cantilevered from respective sides of the structure; and
- a tail portion formed by two aerodynamic surfaces forming a V.

The aircraft described in WO-A-2020/105045 further comprises:
- two pairs of first rotors with axis fixed with respect to the structure; and
- two pairs of second rotors with axis inclinable with respect to the structure.

In more detail, the first rotors and second rotors can be controlled independently from one another so as to provide respective first and second thrusts adjustable independently from each other.

A pair of second rotors is arranged at free ends of respective half-wings while the other pair of second rotors is arranged at free ends of respective aerodynamic surfaces of the tail portion.

The second rotors are inclinable between a first position wherein the respective second axes are arranged orthogonal to the longitudinal direction of the aircraft and provide a vertical thrust, and a second position wherein respective second axes are arranged parallel to the longitudinal direction of the aircraft and provide a thrust parallel to the direction of forward motion of the aircraft.

Consequently, the aircraft can selectively assume:
- the first configuration, wherein the second rotors are arranged in the first position and cooperate with the first rotors to provide the vertical thrust required to sustain the aircraft; and
- the second configuration, wherein the second rotors are arranged in the second position and provide the horizontal thrust necessary for the forward motion of the aircraft while the first rotors and the half-wings provide the vertical thrust necessary to sustain the aircraft.

Further examples of convertible aircraft with electric propulsion capable of assuming the aforesaid first and second configurations are illustrated in the patent applications EP-A-4105123, EP-A-4105124; EP-A-4105125; EP-A-4279390 and EP-A-4279383 by the same Applicant.

The possibilities of using electric propulsion in convertible aircraft are limited by the low power density of current electric batteries.

Therefore, there is the need in the sector to minimize the weight of convertible aircraft, at the same time guaranteeing their high levels of safety, in particular when the aircraft is in the first configuration.

There is also the need in the sector to maximize the aerodynamic efficiency of convertible aircraft, without penalizing the aforesaid levels of safety.

The object of the present invention is to produce a convertible aircraft, which allows at least one of the requirements specified above to be met in a simple and inexpensive way.

According to the invention, this object is achieved by a convertible aircraft capable of hovering as claimed in claim 1.

For a better understanding of the present invention, eight preferred non-limiting embodiments are described below, purely by way of example and with the aid of the accompanying drawings, wherein:
- Fig. 1 is a perspective view of a first embodiment of a convertible aircraft produced according to the dictates of the present invention arranged in a first configuration;
- Fig. 2 is a perspective view of the aircraft of Fig. 1 arranged in a second configuration;
- Fig. 3 is a perspective view of a second embodiment of an aircraft produced according to dictates of the present invention in the second configuration;
- Fig. 4 is a perspective view of a third embodiment of an aircraft produced according to dictates of the present invention in the second configuration;
- Fig. 5 is a perspective view of a fourth embodiment of an aircraft produced according to dictates of the present invention in the second configuration;
- Fig. 6 is a perspective view of a fifth embodiment of an aircraft produced according to dictates of the present invention in the second configuration;
- Fig. 7 is a perspective view of a sixth embodiment of an aircraft produced according to dictates of the present invention in the second configuration;
- Fig. 8 is a plan view of a seventh embodiment of an aircraft produced according to dictates of the present invention in the first and in the second configuration; and
- Fig. 9 is a perspective view of an eighth embodiment of an aircraft produced according to dictates of the present invention in the second configuration.

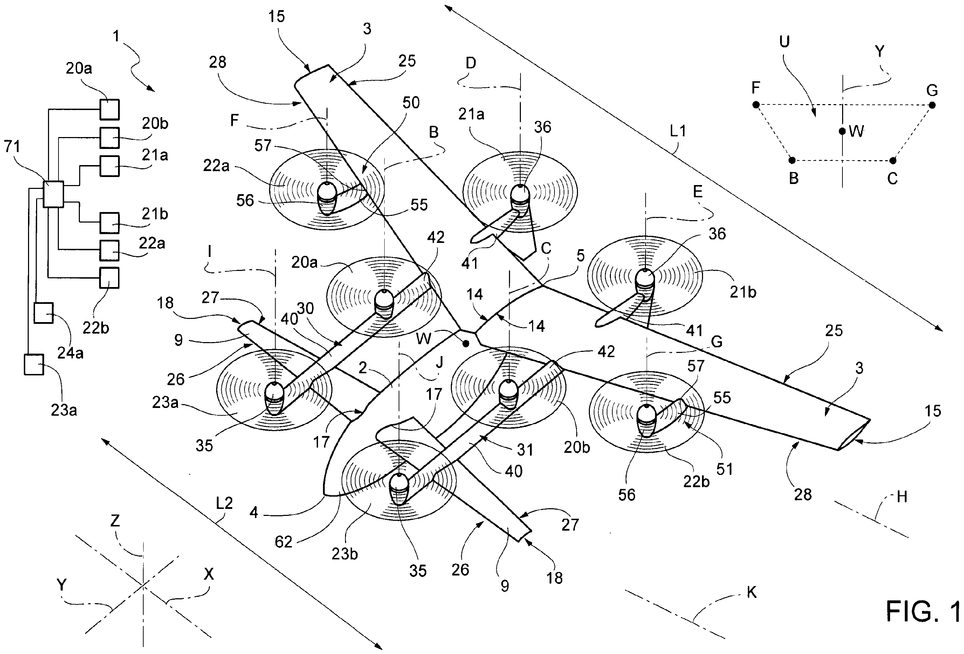

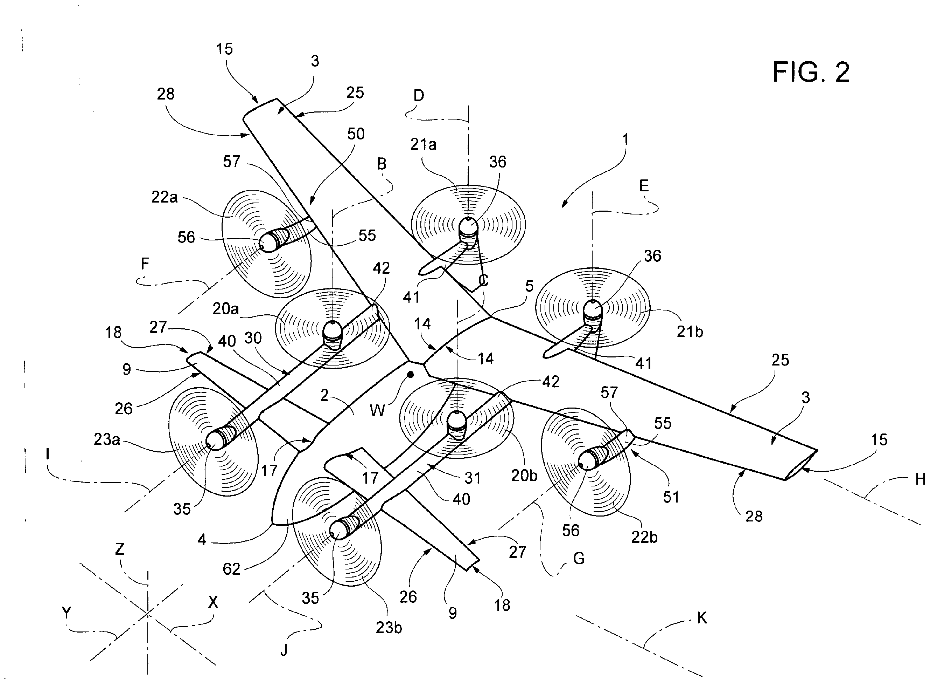

With reference to Figs. 1 and 2, the reference number 1 indicates a convertible aircraft capable of hovering according to the first embodiment of the invention.

In more detail, the aircraft 1 is selectively switchable between:
- a first configuration (Fig. 1), wherein it performs a hovering manoeuvre or moves forward along a mainly vertical trajectory; and
- a second configuration (Fig. 2), wherein it is in forward flight conditions and proceeds along a mainly horizontal trajectory.

It is specified that hereinafter in the present description, expressions such as "above", "below", "at the front", "at the rear" and the like are used with reference to normal conditions of forward flight or of hovering of the convertiplane 1 illustrated in Figs. 1 and 2.

It is possible to identify a set of three axes integral with the aircraft 1 and originating in a centre of gravity W of the aircraft 1 formed by:
- a longitudinal axis Y of symmetry of the aircraft 1;
- an axis X orthogonal to the axis Y; and
- an axis Z orthogonal to the axes X, Y.

In a known way, the rotations of the aircraft 1 around the axes Y, X, Z are associated with the following manoeuvres:
- roll, i.e., rotation around the axis Y;
- pitch, i.e., rotation around the axis X; and
- yaw, i.e., rotation around the axis Z.

The aircraft 1 essentially comprises:
- a structure 2 elongated along the axis Y and defining a nose 4 and a tail 5 of the aircraft 1;
- a pair of half-wings 3 extending cantilevered from respective mutually opposite sidewalls 62 of the structure 2 and transversely to the axis Y.

The structure 2 is preferably a fuselage defining a cockpit and a compartment for accommodating a plurality of passengers. Alternatively, the structure 2 houses a compartment for loading equipment of the aircraft 1.

With reference to the normal operating conditions of forward flight, the aircraft 1 proceeds according to a direction oriented from the tail 5 to the nose 4.

The half-wings 3 are designed to provide the aircraft 1 with a first lift value, suitable to sustain the aircraft 1 arranged in the second configuration.

The half-wings 3 comprise respective free ends 15 opposite the structure 2.

The half-wings 3 extend above the structure 2, with reference to a normal flight condition of the aircraft 1.

In the case illustrated, the half-wings 3 comprise respective ends 14 arranged on the side of the structure 2 and opposite the corresponding ends 15.

The half-wings 3 are delimited by respective leading edges 28 towards the nose 4 and by respective trailing edges 25 towards the tail 5.

The aircraft 1 further comprises a pair of canard type aerodynamic surfaces 9 projecting cantilevered from respective mutually opposite sides of the nose 4 of the structure 2 and suitable to generate a second lift/downforce value to ensure the desired degree of longitudinal stability to the aircraft 1 arranged in the second configuration.

The aerodynamic surfaces 9 comprise, in turn:
- respective root portions 17 projecting cantilevered from and connected to respective sidewalls 62 of the structure 2; and
- respective end portions 18 arranged on the opposite side of the corresponding root portions 17 with respect to the structure 2.

In particular, the root 17 and end 18 portions are coplanar with each other.

The aerodynamic surfaces 9 are delimited by respective leading edges 26 towards the nose 4 and by respective trailing edges 27 towards the tail 5.

In the case illustrated, the wingspan L1 of the half-wings 3 is greater than the wingspan L2 of the aerodynamic surfaces 9.

In the present description, the term "wingspan" means the distance between opposite free ends 17, 18 of the respective half-wings 3 and aerodynamic surfaces 9.

The aircraft 1 further comprises:
- a pair of rotors 20a, 20b rotatable around respective axes B, C fixed with respect to the structure 2;
- a pair of rotors 21a, 21b rotatable around respective axes D, E fixed with respect to the structure 2; and
- a pair of rotors 22a, 22b rotatable around respective axes F, G and inclinable with respect to an axis H between a respective first position assumed when the aircraft 1 is in the first configuration (Fig. 1) and a respective second position assumed when the aircraft 1 is in the second configuration (Fig. 2).

The rotors 20a, 20b; 21a, 21b; 22a, 22b provide desired values of the relative thrusts T1, T2; T3, T4; T5, T6.

The aircraft 1 further comprises a control unit 71 (illustrated schematically in Fig. 1) receiving as input a plurality of control signals supplied by the crew, by an autopilot or by a remote control system, and programmed to provide as output a plurality of commands to command the rotors 20a, 20b; 21a, 21b; 22a, 22b so that they provide the desired values of the relative thrusts T1, T2; T3, T4; T5, T6.

In more detail, the control unit 71 is programmed to command the rotors 20a, 20b; 21a, 21b; 22a, 22b to generate respective independent thrusts T1, T2; T3, T4; T5, T6.

More in particular, the control unit 71 is programmed to command the rotors 20a, 20b; 21a, 21b; 22a, 22b to generate respective thrusts T1, T2; T3, T4; T5, T6 having a resultant parallel to the axis Z, when the aircraft 1 is in the first configuration (Fig. 1).

Moreover, the control unit 71 is programmed to command the rotors 22a, 22b to generate respective thrusts T5, T6 having a resultant parallel to the axis Y, when the aircraft 1 is in the second configuration (Fig. 2).

Moreover, the control unit 71 is programmed to command the rotors 20a, 20b; 21a, 21b to generate respective zero thrusts T1, T2; T3, T4 in predetermined operating conditions and when the aircraft 1 is in the second configuration.

Finally, the control unit 71 is programmed to command the rotation of the rotors 22a, 22b around the axis H during the transition of the aircraft 1 between the first and the second configuration.

In the case illustrated, the thrusts T1, T2; T3, T4 have a main component parallel to the respective axes B, C; D, E and parallel to the axis Z, both when the aircraft 1 is arranged in the first configuration and when the aircraft 1 is arranged in the second configuration.

The thrusts T5, T6 have a main component parallel to the axes B, C; D, E and to the axis Z when the aircraft 1 is arranged in the first configuration and a main component parallel to the axis Y when the aircraft 1 is arranged in the second configuration.

The axes B, C; D, E and F, G are arranged symmetrically with respect to the axis Y in the first configuration of the aircraft 1.

The axes B, D, F are arranged on a lateral side of the axis Y and the axes C, E, G are arranged on the other lateral side of the axis Y in the first configuration of the aircraft 1.

The axes B, C, D, E are arranged orthogonal or inclined with respect to the axis Y both when the aircraft 1 is arranged in the first configuration and when the aircraft 1 is arranged in the second configuration.

The axes F, G are arranged orthogonal or inclined with respect to the axis Y when the aircraft 1 is arranged in the first configuration, and are arranged parallel to the axis Y when the aircraft 1 is arranged in the second configuration.

In the first configuration of the aircraft 1, the thrusts T1, T2, T3, T4, T6 are parallel to one another.

The rotors 20a, 20b, 21a, 21b are supported at least indirectly by respective half-wings 3, as will be explained in more detail hereinafter in the present description.

More precisely, the axes D, E of the rotors 21a, 21b are arranged behind the trailing edges 25 of the half-wings 3, proceeding from the tail 5 to the nose 4 along the axis Y.

In a preferred embodiment, the rotors 22a, 22b are also carried by respective half-wings 3.

Advantageously, the traces of the axes F, G are arranged offset with respect to the axes B, C with reference to the axis Y, when the aircraft 1 is in the first configuration, and the centre of gravity W is interposed proceeding parallel to the axis Y between the axes F, G and B, C, when the aircraft 1 is in the first configuration.

In particular, the centre of gravity W is arranged along the axis Y.

With reference to the first configuration of the aircraft 1, the traces of the axes B, C, F, G define, in a plane defined by the axes Y, X, the vertices of a trapezium U inside which the centre of gravity W is arranged, when the aircraft 1 is in the first configuration.

In the case illustrated, the trapezium U is an isosceles trapezium.

The segment joining the axes B, C defines the shorter base of the trapezium U and extends parallel to the axis X.

The segment joining the axes F, G defines the longer base of the trapezium U and also extends parallel to the axis X.

The axes B, C are arranged in front of axes F, G, proceeding from the tail 5 towards the nose 4 of the structure 2 along the axis Y.

The axes B, C are interposed parallel to the axis X between the axes F, G.

The axes B, C; F, G are arranged in front of the leading edge 28 of the respective half-wings 3, proceeding from the tail 5 to the nose 4 along the axis Y.

The axes D, E of respective rotors 21a, 21b are each arranged behind the trailing edge 25 of the respective half-wing 3, proceeding from the tail 5 towards the nose 4 along the axis Y.

The aircraft 1 further comprises a pair of rotors 23a, 23b rotatable around respective axes I, J.

The axes I, J are inclinable with respect to an axis K between a respective first position assumed when the aircraft 1 is in the first configuration (Fig. 1) and a respective second position assumed when the aircraft 1 is in the second configuration (Fig. 2).

In more detail, the axes I, J are arranged orthogonal or inclined with respect to the axis Y when the aircraft 1 is arranged in the first configuration (Fig. 1), and are arranged parallel to the axis Y when the aircraft 1 is arranged in the second configuration (Fig. 2).

The axes I, J are parallel to the axes B, C, D, E, F, G in the first configuration and parallel to the axes F, G in the second configuration of the aircraft 1 (Fig. 2).

The rotors 23a, 23b are arranged on respective lateral sides of the structure 2 with reference to the axis Y.

Moreover, the rotors 23a, 23b are arranged in front of the leading edges 26 of corresponding aerodynamic surfaces 9, when the aircraft 1 is in the second configuration (Fig. 2).

Moreover, the axes I, J of the relative rotors 23a, 23b are arranged in front of the leading edges 26 of corresponding aerodynamic surfaces 9, when the aircraft 1 is arranged in the first configuration of Fig. 1.

The rotors 23a, 23b provide desired values of relative thrusts T7, T8.

The control unit 71 is programmed to provide as output a plurality of commands to command the rotors 23a, 23b, so that they provide desired values of the relative thrusts T7, T8.

In more detail, the values of the thrusts T7, T8 are independent from each other.

The control unit 71 is programmed to command the rotation of the rotors 23a, 23b around the axis K and thereby determine the transition of the aircraft 1 between the first and the second configuration.

The thrusts T7, T8 have a main component parallel to the axis Z when the aircraft 1 is arranged in the first configuration and a main component parallel to the axis Y when the aircraft 1 is arranged in the second configuration.

When the aircraft 1 is in the first configuration, the axis I is aligned with the axes B, D parallel to the axis Y and the axis J is also aligned with the axes C, E parallel to the axis Y.

In a preferred embodiment of the invention, the rotors 20a, 20b; 21a, 21b; 22a, 22b; 23a, 23b have a fixed pitch.

The rotors 20a, 20b; 21a, 21b; 22a, 22b; 23a, 23b are preferably operated by respective electric motors independent from each other.

In the case illustrated, the half-wings 3 have positive deflection angles, i.e., the respective leading edges 28 and trailing edges 25 are divergent from each other, proceeding from the tail 5 towards the nose 4 parallel to the axis Y.

The half-wings 3 and the aerodynamic surfaces 9 have respective positive or negative dihedral angles.

The aircraft 1 further comprises:
- a support beam 30 to support the rotors 23a, 20a, 21a; and
- a support beam 31 to support the rotors 23b, 20b, 21b.

The support beams 30, 31 extend from respective lateral sides of the structure 2.

The support beams 30, 31 extend parallel to each other and parallel to the axis Y.

Each support beam 30, 31 comprises, in turn:
- a respective front axial end 35 at which the respective axis I, J is arranged; and
- a respective rear axial end 36 opposite the end 35, at which the respective axis D, E is arranged.

Each support beam 30, 31 further comprises:
- a respective front portion 40 crossing a respective aerodynamic surface 9 and ending in the respective end 35;
- a respective rear portion 41 arranged below a respective half-wing 3 and supported thereby and ending in the respective end 36; and
- a respective intermediate portion 42 interposed between the respective front 40 and rear 41 portions, interposed between a respective half-wing 3 and a respective aerodynamic surface 9, and supporting the rotors 20a, 20b.

Preferably, the support beams 30, 31 extend above a main portion of the structure 2, with reference to the axis Z.

In other words, the height of a first portion of the structure 2 arranged below the support beams 30, 31 parallel to the axis Z is greater than the height of a second portion of the structure 2 arranged above the support beams 30, 31 parallel to the axis Z.

The aircraft 1 further comprises:
- a support beam 50 to support the rotors 22a; and
- a support beam 51 to support the rotors 22b.

The support beams 50, 51 extend from respective lateral sides of the structure 2.

The support beams 50, 51 extend parallel to each other and parallel to the axis Y.

In particular, the support beam 30 is interposed between the support beam 50 and the structure 2 parallel to the axis X.

The support beam 31 is interposed between the support beam 51 and the structure 2 parallel to the axis X.

Each support beam 50, 51 comprises, in turn:
- a respective front axial portion 55, comprising a front end 56 at which the respective axis F, G is arranged and spaced from the respective surface 9 parallel to the axis Y; and
- a respective axial portion 57 opposite the portion 55, arranged below a respective half-wing 3 and supported thereby.

In the case illustrated, the support beams 50, 51 extend completely in position in front of the trailing edges 25 of the respective half-wings 3 and are shorter in length than the support beams 30, 31.

In use and with reference to Fig. 1, the aircraft 1 lands and takes off in the first configuration, wherein the rotors 20a, 20b, 21a, 21b, 22a, 22b, 23a, 23b are arranged in the first position in which the relative thrusts T1, T2, T3, T4, T5, T6, T7 and T8 are directed parallel to the axis Z and provide the lift necessary to sustain the aircraft 1.

In the first configuration, the control unit 71 is programmed to perform the yaw manoeuvre of the aircraft 1, inclining the rotors 22a, 22b by respective angles different from each other around the axis H and/or inclining the rotors 23a, 23b by angles different from each other around the axis K.

When the aircraft 1 is on the ground, the crew and the passengers can access the structure 2 or disembark from the structure 2 easily and with limited or even no interference with the support beams 30, 31.

In the same way, also various types material can be embarked on, or disembarked from, the structure 2 with limited or even no interference with the support beams 30, 31.

The aircraft 1 moves forward in cruising mode in the second configuration with the rotors 22a, 22b; 23a, 23b arranged in the second position wherein the respective thrusts T5, T6 T7, T8 are arranged parallel to the axis Y.

To adjust the roll angle of the aircraft 1, the control unit 71 is programmed to command the rotors 20a, 20b, 21a, 21b so that the thrusts T1, T3 are the same as each other and greater (less) than the thrusts T2, T4 the same as each other, so as to generate a torque and consequent rotation of the aircraft around the axis Y.

To adjust the pitch angle of the aircraft 1, the control unit 71 is programmed to command the rotors 20a, 20b, 21a, 21b, so that the thrusts T1, T2 are the same as each other and greater (less) than the thrusts T3, T4 the same as each other, so as to generate a torque and consequent rotation of the aircraft around the axis X.

To adjust the yaw angle of the aircraft 1, the control unit 71 is programmed to command the rotors 22a, 22b, 23a, 23b, so that the sum of the thrusts T5, T7 is greater (less) than the sum of the thrusts T6, T8, so as to generate a torque and a consequent rotation of the aircraft around the axis Z.

During the transition from the first to the second configuration of the aircraft, the control unit 71 is programmed to reduce the thrusts T1, T2; T3, T4 of the rotors 20a, 20b; 21a, 21b as the rotors 22a, 22b; 23a, 23b move progressively towards a condition of parallelism with the axis Y and the speed of the aircraft 1 increases.

In the second configuration illustrated in Fig. 2, the lift necessary to sustain the aircraft 1 is provided mostly by the half-wings 3. The thrusts T3, T4, T5, T6 of the rotors 22a, 22b; 22a, 23b ensure the correct trim of the aircraft 1 - i.e., adjustment of the total lift/downforce value at the required speed conditions and weight of the aircraft 1 - while the rotors 20a, 20b; 21a, 21b are deactivated so that the thrusts T3, T4, T5, T6 are zero.

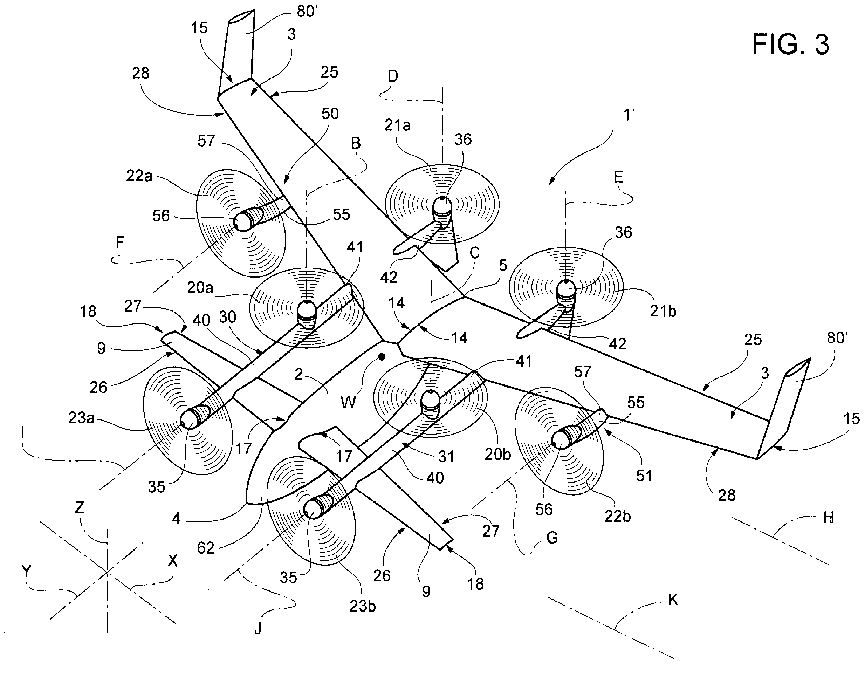

With reference to Fig. 3, the reference 1' indicates an aircraft according to a second embodiment of the invention.

The aircraft 1' is similar to the aircraft 1 and will be described below only in so far as it differs from the latter; equal or equivalent parts of the lubrication systems 1, 1' will be marked, where possible, with the same reference numbers.

In particular, the aircraft 1' differs from the aircraft 1 in that the half-wings 3 comprise respective end fins 80' projecting cantilevered upwards from respective ends 15.

Operation of the aircraft 1' differs from that of the aircraft 1 in that the fins 80' reduce the aerodynamic drag caused by the half-wings 3 and, therefore, the total aerodynamic drag of the aircraft 1'.

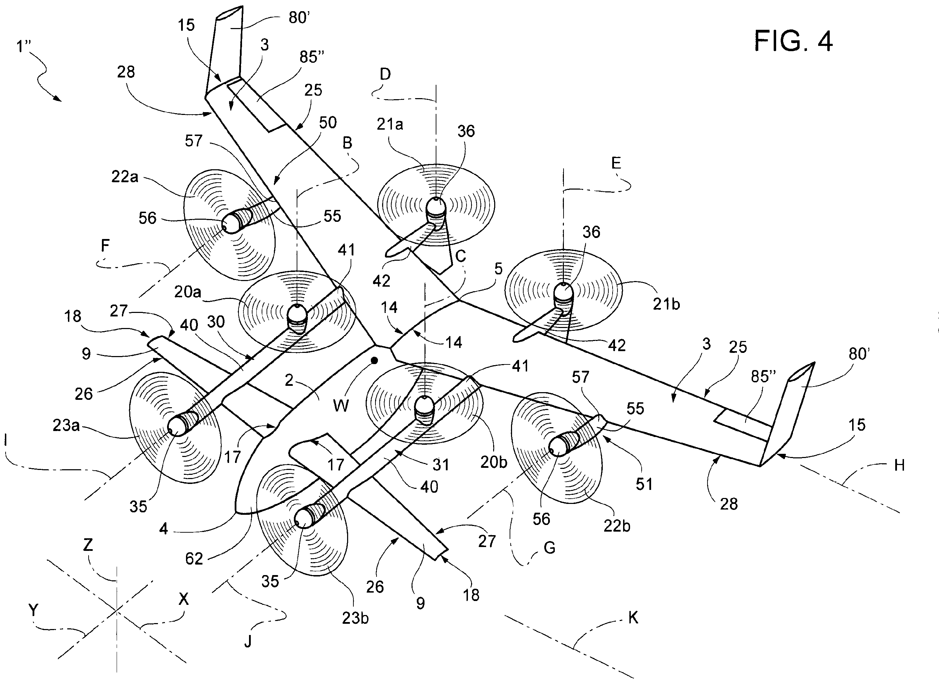

With reference to Fig. 4, the reference 1" indicates an aircraft according to a third embodiment of the invention.

The aircraft 1" is similar to the aircraft 1' and will be described below only in so far as it differs from the latter; equal or equivalent parts of the lubrication systems 1', 1" will be marked, where possible, with the same reference numbers.

In particular, the aircraft 1" differs from the aircraft 1' in that each half-wing 3 comprises a respective elevon 85", in particular an aileron 85 movable with respect to the half-wing 3 so as to vary the first lift value thereof generated.

More in particular, the elevons 85" are arranged at the ends 15 of the corresponding half-wings 3.

In the case illustrated, the elevons 85" are adjacent to the fins 80' of the relative half-wings 3.

Operation of the aircraft 1" differs from that of the aircraft 1' in that the control unit 71 controls rolling or pitching of the aircraft 1" moving the elevons 85" concordantly or discordantly with respect to the corresponding half-wings 3.

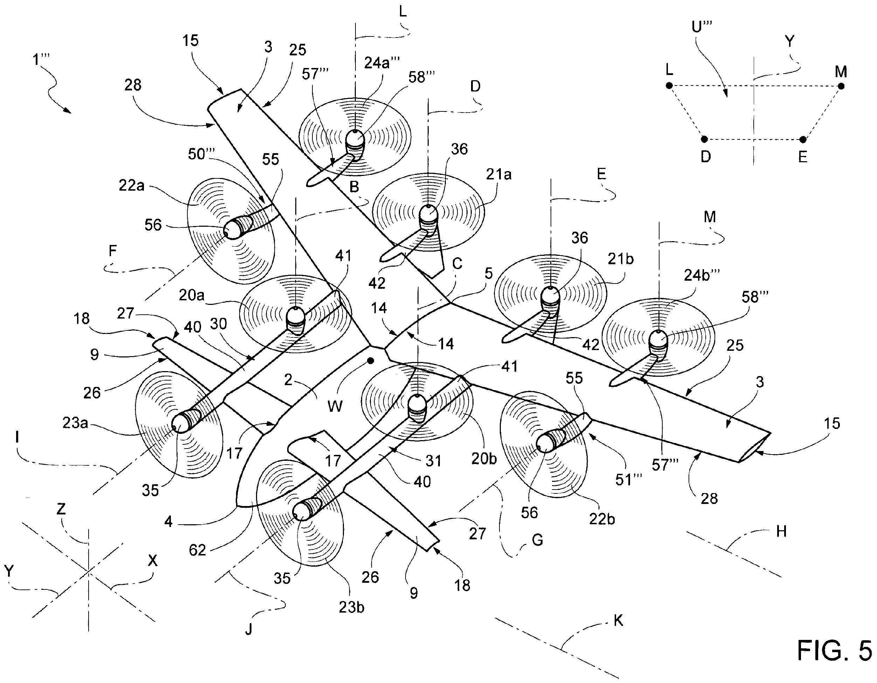

With reference to Fig. 5, the reference 1‴ indicates an aircraft according to a fourth embodiment of the invention.

The aircraft 1‴ is similar to the aircraft 1 and will be described below only in so far as it differs from the latter; equal or equivalent parts of the lubrication systems 1, 1‴ will be marked, where possible, with the same reference numbers.

In particular, the aircraft 1‴ differs from the aircraft 1' in that it comprises two further rotors 24a‴, 24b‴ rotatable around respective axes L, M and operable to exert respective thrusts T9, T10 parallel to the axes L, M.

The axes L, M are fixed with respect to the structure 2.

The axes L, M are, in the case illustrated, parallel to the axes B, C, D, E of the respective rotors 20a, 20b, 20c, 20d and, therefore, substantially parallel to the axis Z.

Moreover, the axes L, M are parallel to the axes B, C, D, E, I, J of respective rotors 21a, 21b, 22a, 22b, 23a, 23b, when the aircraft 1 is arranged in the first configuration.

The rotors 24a‴, 24b‴ and the respective axes L, M are arranged on respective lateral sides of the structure 2 with reference to the axis Y, and are arranged symmetrically with respect to the axis Y.

Moreover, the rotors 24a‴, 24b‴ and the respective axes L, M are arranged behind the trailing edges 25 of respective half-wings 3, proceeding from the tail 5 towards the nose 4 parallel to the axis Y, when the aircraft 1 is in the second configuration.

The axes L, M are arranged behind the axes D, E, proceeding from the tail 5 towards the nose 4 parallel to the axis Y.

The axes D, E are interposed between the axes L, M parallel to the axis X.

The axes L, M, D, E form an isosceles trapezium U‴ with longer base formed by the segment joining the axes L, M, shorter base formed by the segment joining the axes D, E, and height parallel to the axis Y.

The control unit 71 is programmed to provide as output a plurality of commands to also command the rotors 24a‴, 24b''', so that they provide desired values of the relative thrusts T11, T12 preferably parallel to the axis Z.

The rotors 24a''', 24b''' are supported by respective support beams 50‴, 51‴.

The support beams 50''', 51''' differ from the support beams 50, 51 in that they also extend in position behind the trailing edges 25 of the respective half-wings 3.

More in particular, the support beams 50''', 51''' differ from the support beams 50, 51 in that the respective portions 57‴ extend behind the trailing edges 25 of the respective half-wings 3 and have respective rear ends 58" ' opposite the corresponding ends 56 and at which the rotors 24a''', 24b''' are mounted.

Operation of the aircraft 1‴ differs from that of the aircraft 1 in that the control unit 71 commands the rotors 24a''', 24b''' to generate the respective thrusts T11, T12 and contribute to generating the lift necessary to sustain the aircraft 1‴ in flight, when the aircraft 1‴ is in the first configuration.

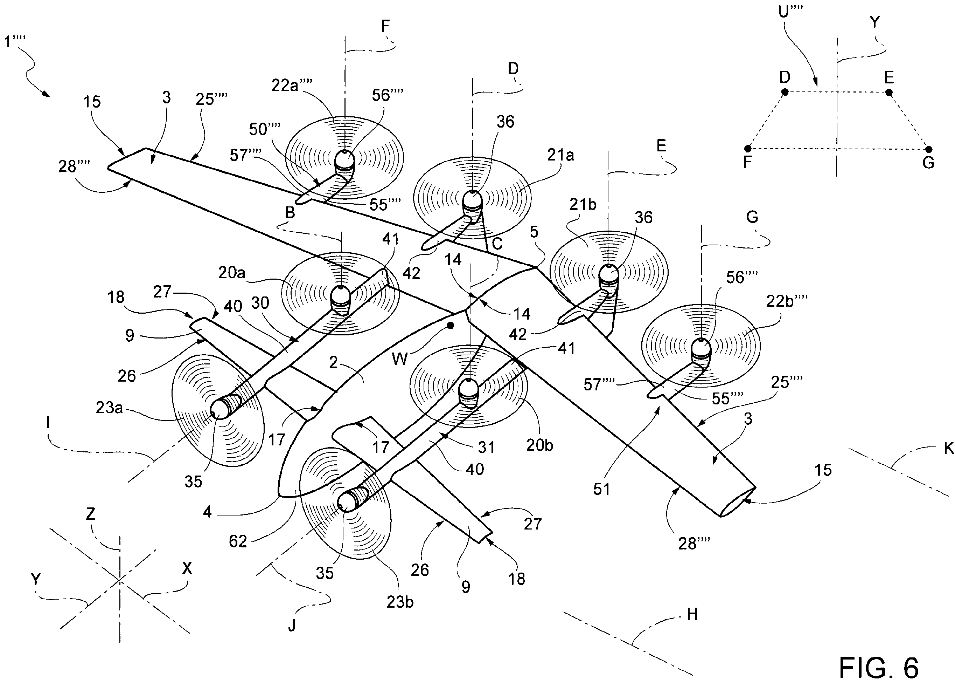

With reference to Fig. 6, the reference 1ʺʺ indicates an aircraft according to a fifth embodiment of the invention.

The aircraft 1ʺʺ is similar to the aircraft 1 and will be described below only in so far as it differs from the latter; equal or equivalent parts of the lubrication systems 1, 1ʺʺ will be marked, where possible, with the same reference numbers.

The aircraft 1ʺʺ differs from the aircraft 1 in that:
- the axes F, G of the rotors 22aʺʺ, 22bʺʺ are fixed with respect to the structure 2 and arranged parallel to the axis Z in the case illustrated;
- the axes F, G of the rotors 22aʺʺ, 22bʺʺ are arranged behind the respective trailing edges 25ʺʺ of corresponding half-wings 3 when the aircraft 1ʺʺ is in the first configuration and with reference to the axis Y; and
- the support beams 50ʺʺ extend behind the respective leading edges 28ʺʺ of corresponding half-wings 3, and the axes F, G are arranged at respective rear ends 56 of the relative support beams 50ʺʺ with reference to the axis Y, when the aircraft 1 is in the first configuration and with reference to the axis Y.

The axes F, G, D, E form a further isosceles trapezium Uʺʺ with longer base formed by the segment joining the axes F, G, shorter base formed by the segment joining the axes D, E, and height parallel to the axis Y.

Finally, moreover, the aircraft 1ʺʺ differs from the aircraft 1 in that the half-wings 3ʺʺ have a negative deflection, i.e., the respective leading edges 28ʺʺ and trailing edges 25ʺʺ are divergent from each other, proceeding from the tail 5 towards the nose 4 parallel to the axis Y.

Operation of the aircraft 1ʺʺ differs from that of the aircraft 1 in that the axes F, G of the rotors 22aʺʺ, 22bʺʺ remain parallel to the axis Z also in the second configuration and the thrust necessary for forward motion of the aircraft 1ʺʺ is provided only by the rotors 23a, 23b in the second configuration.

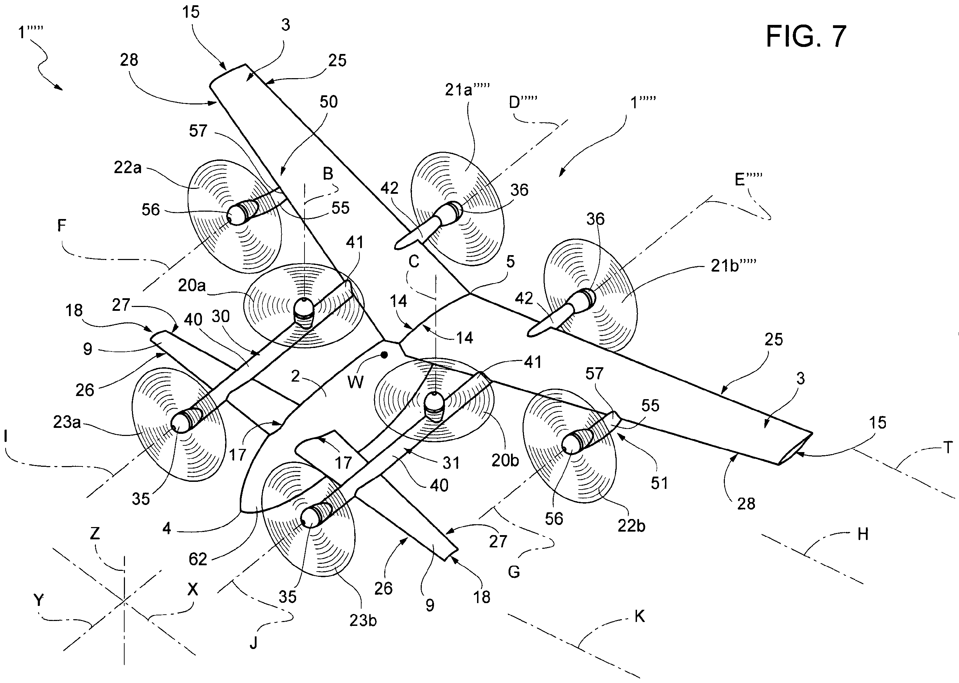

With reference to Fig. 7, the reference 1‴ʺ indicates an aircraft according to a sixth embodiment of the invention.

The aircraft 1‴ʺ is similar to the aircraft 1 and will be described below only in so far as it differs from the latter; equal or equivalent parts of the lubrication systems 1, 1‴ʺ will be marked, where possible, with the same reference numbers.

In particular, the aircraft 1‴ʺ differs from the aircraft 1 in that the axes D‴ʺ, E‴ʺ of the rotors 21a‴ʺ, 21b‴ʺ are inclinable with respect to the structure 2 around an axis T.

The axes D‴ʺ, E‴ʺ are inclinable between:
- a respective third position assumed when the aircraft 1 is in the first configuration (not illustrated); and
- a respective fourth position assumed when the aircraft 1 is in the second configuration (illustrated in Fig. 7).

In more detail, the axes D‴ʺ, E‴ʺ are arranged orthogonal or inclined with respect to the axis Y in the respective third positions and are arranged parallel to the axis Y in the respective fourth positions.

The axes D‴ʺ, E‴ʺ are parallel to the axes B, C, F, G, I, J in the first configuration, and parallel to the axes F, G, I, J and orthogonal to the axes B, C in the second configuration of the aircraft 1.

The axis T is, in particular, parallel to the axes H, X.

The thrusts T3‴ʺ, T4‴ʺ have a main component parallel to the axis Z when the aircraft 1 is arranged in the first configuration and a main component parallel to the axis Y when the aircraft 1 is arranged in the second configuration.

Operation of the aircraft 1‴ʺ differs from that of the aircraft 1 in that the control unit 71 is programmed to command rotation of the rotors 21a‴ʺ, 21b‴ʺ around the axis T and determine the transition of the aircraft 1‴ʺ between the first and the second configuration illustrated in Fig. 7.

When the aircraft 1‴ʺ is in the second configuration, the thrusts T3‴ʺ, T4‴ʺ of the rotors 21a‴ʺ, 21b‴ʺ contribute to generating the thrust necessary for the forward motion of the aircraft 1ʺʺ.

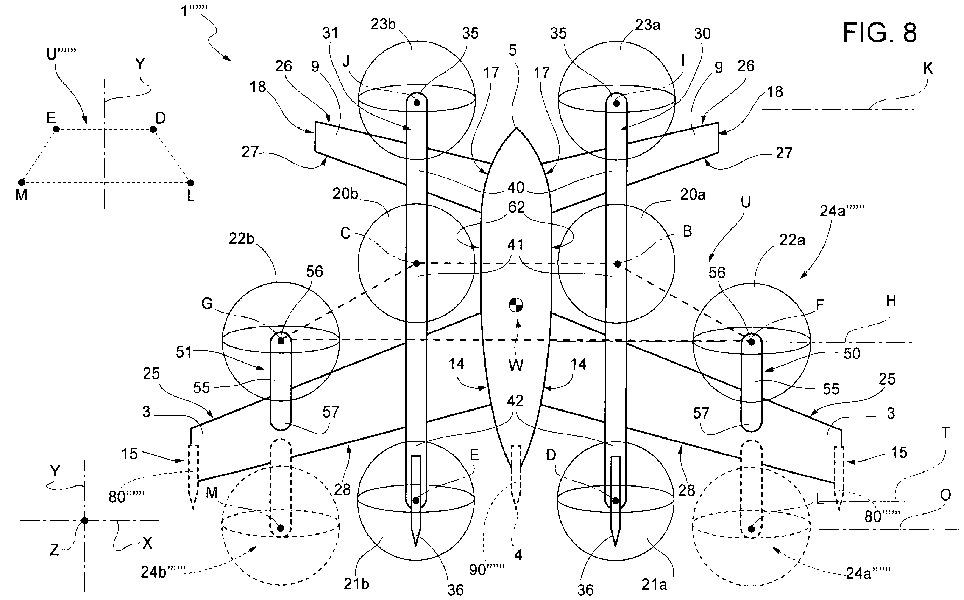

With reference to Fig. 8, the reference 1‴‴ indicates an aircraft according to a seventh embodiment of the invention.

The aircraft 1‴‴ is similar to the aircraft 1ʺʺ and will be described below only in so far as it differs from the latter; equal or equivalent parts of the lubrication systems 1‴‴, 1ʺʺ will be marked, where possible, with the same reference numbers.

In particular, the aircraft 1‴‴ differs from the aircraft 1‴ in that the rotors 24a‴‴, 24b‴ʺʺ and the respective axes L, M are inclinable with respect to the structure 2 around an axis O parallel to the axes H and K.

The axes L, M of the rotors 24a‴‴, 24b‴ʺʺ are parallel to the axes B, C, D, E, F, G, I, J of the respective rotors 20a, 20ba, 21a, 21b, 22a, 22b, 23a, 23b and, therefore, substantially parallel to the axis Z, when the aircraft 1‴‴ is arranged in the first configuration.

The axes L, M of the rotors 24a‴‴, 24b‴ʺʺ are parallel to the axes F, G, I, J of respective rotors 22a, 22b, 23a, 23b, when the aircraft 1‴‴ is arranged in the second configuration.

With reference to the second configuration, the rotors 24a‴‴, 24b‴ʺʺ and the respective axes L, M are arranged on respective lateral sides of the structure 2 with reference to the axis Y, and are arranged symmetrically with respect to the axis Y.

Moreover, the rotors 24a‴‴, 24b‴ʺʺ and the respective axes L, M are arranged behind the trailing edges 25 of respective half-wings 3, proceeding from the tail 5 towards the nose 4 parallel to the axis Y when the aircraft 1 is in the second configuration.

The axes L, M are arranged behind the axes D, E, proceeding from the tail 5 towards the nose 4 parallel to the axis Y.

The axes D, E are interposed between the axes L, M parallel to the axis X.

The axes L, M, D, E form, in a plane defined by the axes X, Y, an isosceles trapezium U‴‴ with longer base formed by the segment joining the axes L, M, shorter base formed by the segment joining the axes D, E, and height parallel to the axis Y.

Moreover, the aircraft 1‴‴ differs from the aircraft 1‴ in that:
- the half-wings 3 comprise respective end fins 80‴‴ projecting cantilevered upwards from the respective end 15; and
- the structure 2 comprises a tail fin 90‴‴ arranged at the tail 4.

Operation of the aircraft 1‴‴ differs from that of the aircraft 1‴ in that the control unit 71 is programmed to command inclination of the axes L, M of respective rotors 24a‴‴, 24b‴‴ around the axis O during transition of the aircraft 1‴‴ between the first and the second configuration.

When the aircraft 1‴‴ is in the second configuration, the thrusts T11, T12 of the rotors 24a‴‴, 24b‴‴ contribute to generating the thrust necessary for the forward motion of the aircraft 1‴‴.

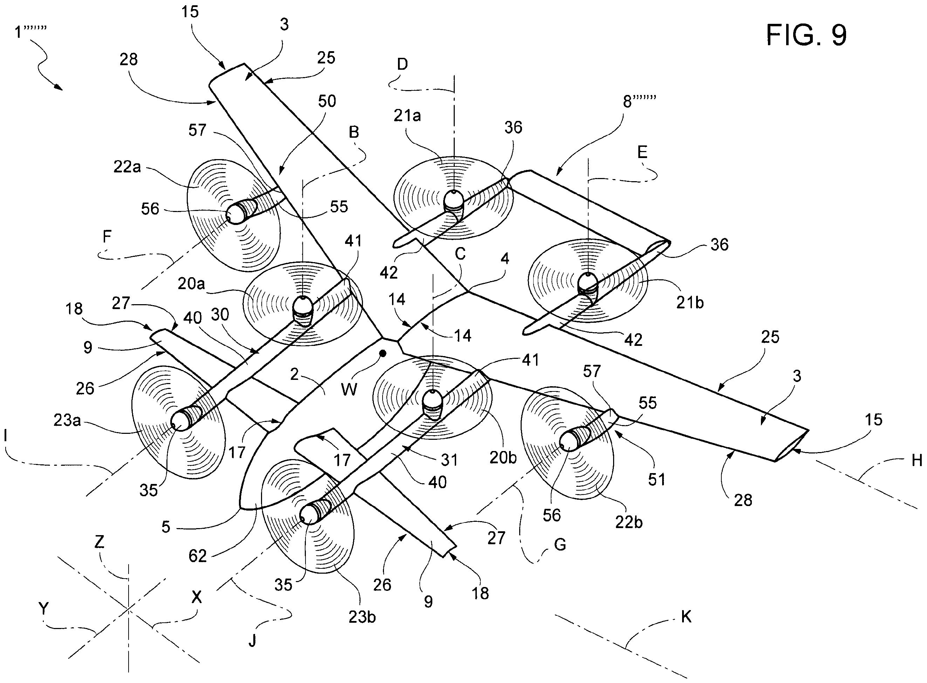

With reference to Fig. 9, the reference 1‴ʺʺ indicates an aircraft according to an eighth embodiment of the invention.

The aircraft 1‴ʺʺ ' is similar to the aircraft 1 and will be described below only in so far as it differs from the latter; equal or equivalent parts of the lubrication systems 1‴ʺʺ, 1 will be marked, where possible, with the same reference numbers.

In more detail, the aircraft 1‴‴ʺ differs from the aircraft 1 in that it comprises an aerodynamic surface 8‴ʺʺ defining the tail 5 and arranged behind the axes D, E with reference to the axis Y.

The aerodynamic surface 8‴ʺʺ defines a longitudinal stabilizer of the aircraft 1‴ʺʺ and is configured to generate a third lift or downforce value.

The aircraft 1‴ʺʺ ' differs from the aircraft 1 in that the ends 36 of the beams 30, 31 are arranged behind respective axes D, E in the first configuration of the aircraft 1‴ʺʺ.

The aerodynamic surface 8‴ʺʺ extends between respective ends 36 of corresponding beams 30, 31.

In the case illustrated, the aerodynamic surface 8‴ʺʺ extends mainly parallel to the axis X.

Operation of the aircraft 1‴‴ differs from that of the aircraft 1 in that:
- the aerodynamic surface 8‴‴ provides a third lift value to allow balancing of the weight of the aircraft 1‴‴ and ensure its longitudinal stability without varying the first lift value generated by the half-wings 3; and
- the half-wings 3 operate with an angle of attack corresponding to the maximum aerodynamic efficiency, i.e., the maximum value of the ratio between lift and drag generated by the half-wings 3.

By examining the features of the aircraft 1, 1', 1", 1‴, 1ʺʺ , 1‴ʺ , 1‴‴, 1‴ʺʺ according to the present invention, the advantages that can be obtained therewith are evident.

In more detail, the axes F, G of the rotors 22a, 22b are offset with respect to the axes B, C of the rotors 20a, 20b along the axis Y and the centre of gravity W is interposed along the axis Y between the axes F, G and the axes B, C, when the aircraft 1, 1' , 1", 1‴, 1ʺʺ, 1‴ʺ, 1‴‴ e 1‴ʺʺ is arranged in the first configuration.

In this way, in case of failure of one of the rotors 20a, 20b; 22a, 22b, the control unit can adjust the thrusts T1, T2; T5, T6 of the respective remaining rotors 20a, 20b; 22a, 22b so as to ensure the balance of the aircraft 1, 1', 1", 1‴, 1ʺʺ, 1‴ʺ, 1‴‴ and 1‴ʺʺ with respect to the rotation around the axis Y.

The rotors are inclinable around the respective axes H, K.

In this way, the control unit 71 on one hand is programmed to adjust the thrusts T5, T6; T7, T8 of the rotors 22a, 22b; 23a, 23b as well as to allow forward movement of the aircraft 1, 1', 1", 1‴, 1"", 1‴ʺ, 1‴‴ and 1‴ʺʺ in the second configuration.

On the other hand, the control unit 71 is programmed to control the yaw angle of the aircraft in the first configuration, inclining the rotors 22a, 22b by respective angles different from each other around the axis H and/or inclining the rotors 23a, 23b by respective angles different from each other around the axis K.

Similarly, the control unit 71 is programmed to be able to control the yaw angle of the aircraft 1‴ʺ; 1‴‴ in the first configuration also inclining the rotors 21a‴ʺ, 21b‴ʺ; 24a‴‴, 24b‴‴ by respective angles different from each other around the respective axis T; O.

The half-wings 3 of the aircraft have fins 80', 80‴‴ (Figs. 3 and 8); the half-wings 3 of the aircraft 1'' have fins 80'' and elevons 85" (Fig. 4); the half-wings 3 of the aircraft 1ʺʺ have a negative deflection angle (Fig. 6); the half-wings 3 of the aircraft 1‴‴ have respective fins 80‴‴ and the tail 5 has the tail fin 90'''''' (Fig. 8); and the aircraft 1‴ʺʺ has the surface 8‴ʺʺ (Fig. 9).

In this way, it is possible to further increase the aerodynamic efficiency, stability and controllability of the aircraft 1', 1", 1ʺʺ, 1‴‴ and 1‴ʺʺ.

The aerodynamic surface defining the tail 5 (Fig. 9) allows the longitudinal stability and controllability of the aircraft 1', 1", 1ʺʺ, 1‴‴ and 1‴ʺʺ to be increased (Fig. 9).

The support beams 30; 31 support the rotors 20a, 20b; 21a, 21b; 23a, 23b and are arranged above the structure 2.

In this way, when the aircraft 1, 1', 1" , 1‴, 1ʺʺ, 1‴ʺ, 1‴‴ is on the ground, the crew and the passengers can access the structure 2 or disembark from the structure 2 easily and with limited or even no interference with the support beams 30, 31.

Similarly, also various types of material can be embarked on or disembarked from the structure 2 with limited or even no interference with the support beams 30, 31.

It is clear that modifications and variations can be made to the aircraft 1, 1', 1", 1‴, 1ʺʺ, 1‴ʺ, 1‴‴, 1‴ʺʺ and to the method described and illustrated herein without however departing from the scope of protection defined by the claims.

In particular, the support beams 30, 31 could be interrupted at the respective intermediate portions 42 so as to separate the respective front portions 40 from the respective rear portions 41. In this case, the axes B, C of the rotors 20a, 20b would be inclinable with respect to the structure 2 between respective first positions substantially parallel to the axis Z assumed in the second configuration of the aircraft 1, 1', 1", 1‴, 1ʺʺ, 1‴ʺ, 1‴‴, 1‴ʺʺ and second positions substantially parallel to the axis Y assumed in the second configuration of the aircraft 1, 1', 1", 1‴, 1ʺʺ, 1‴ʺ, 1‴‴, 1‴ʺʺ.

The thrusts T2, T3; T4, T5 might not be parallel to the axis Z and be inclined with respect to the axis Z by an angle ranging from - 15 to + 15 degrees. In particular, the axes B, C (D, E) could converge in the axis Z above or below the structure 2.

In particular, the axes B, C (D, E) could converge in the axis Z above or below the structure 2.

At least some or all of the rotors 20a, 20b, 21a, 21b, 22a, 22b could have a variable pitch.

Moreover, the half-wings 3 of the aircraft 1, 1', 1", 1‴, 1‴ʺ, 1‴‴, 1‴ʺʺ could have respective negative deflection angles similar to the half-wings 3 of the aircraft 1ʺʺ.

Finally, moreover, the half-wings 3 of the aircraft 1, 1', 1ʺʺ, 1‴ʺ and 1‴ʺʺ could comprise respective end fins 80', 80‴ʺ and/or elevons 85" similarly to the half-wings 3', 3‴ʺ; 3".

Moreover, the aircraft 1, 1', 1", 1‴, 1ʺʺ, 1‴ʺ, 1‴‴ could have the surface 8‴ʺʺ similar to the aircraft 1‴ʺʺ.

Finally, the structures 2 of the aircraft 1, 1', 1", 1‴, 1ʺʺ, 1‴ʺ, 1‴ʺʺ could have respective tail fins 90‴‴ similarly to the aircraft 1‴‴.

## Claims

1. Convertible aircraft (1, 1', 1", 1‴, 1ʺʺ, 1‴ʺ, 1‴‴) comprising:
- a structure (2) defining a first longitudinal axis (Y) of said aircraft (1, 1', 1", 1‴, 1ʺʺ, 1‴ʺ, 1‴‴, 1‴ʺʺ) and a second axis (X) transverse to said first axis (Y); said structure (2) comprising, in turn, a nose (4) and a tail (5);
- a pair of half-wings (3) arranged on respective mutually opposite sidewalls (62) of said structure (2) and generating, in use, a first lift or downforce value; said half-wings (3) each comprising a respective first leading edge (28) and a respective first trailing edge (25);
- a first and a second rotor (20a, 20b) respectively rotatable around a third and fourth axis (B, C), and;
- a third and a fourth rotor (21a, 21b) respectively rotatable around a fifth and sixth axis (D, E);
said third and fourth axis (B, C) being arranged respectively on the mutually opposite sides of a first and a second sidewall (62) of said structure (2) symmetrically with respect to said first axis (Y);
said fifth and sixth axis (D, E) being arranged respectively on the side of said first and second sidewall (62) of said structure (2);
said aircraft (1, 1', 1", 1‴, 1ʺʺ, 1‴ʺ, 1‴‴, 1‴ʺʺ) further comprising:
- a fifth and a sixth rotor (22a, 22b) carried by respective said half-wings (3) and respectively rotatable around a seventh and eighth axis (F, G) with respect to said structure (2) ;
- a seventh and eighth rotor (23a, 23b) respectively rotatable around a ninth and tenth axis (I, J); arranged respectively on said first and second sidewall (62) of said structure (2); said seventh and eighth axis (F, G) being arranged respectively on the side of said first and second sidewall (62) of said structure (2) symmetrically with respect to said first axis (Y);
said ninth and tenth axis (I, J) being arranged respectively on the side of said first and second sidewall (62) of said structure (2) symmetrically with respect to said first axis (Y) ;
said aircraft (1, 1', 1", 1‴, 1ʺʺ, 1‴ʺ, 1‴‴) being switchable between:
- a first hovering or taking off/landing flight configuration wherein at least two between said seventh and eighth axis (F, G) and said ninth and tenth axis (I, J) are arranged transversely to said first axis (Y); and
- a second forward flight configuration wherein said at least two between said seventh and eighth axis (F, G) and said ninth and tenth axis (I, J) are arranged parallel with respect to said first axis (Y);
**characterised in that** said seventh and eighth axis (F, G) are arranged, when said aircraft (1, 1', 1", 1‴, 1ʺʺ, 1‴ʺ, 1‴‴, 1‴ʺʺ) is in said first configuration, offset with respect to said third and fourth axis (B, C) along said first axis (Y);
said aircraft (1, 1', 1", 1‴, 1ʺʺ, 1‴ʺ, 1‴‴, 1‴ʺʺ) comprising a centre of gravity (W) interposed along said first axis (Y) between said seventh and eighth axis (F, G) and said third and fourth axis (B, C), when said aircraft (1, 1', 1", 1‴, 1ʺʺ, 1‴ʺ, 1‴‴, 1‴ʺʺ) is in said first configuration.

2. Aircraft according to claim 1, **characterised in that** the traces of said seventh, eighth, third and fourth axis (F, G, B, C) define the vertices of a first trapezium (U) in a plane defined by said first axis (Y) and said second axis (X), when said aircraft (1, 1', 1", 1‴, 1'''', 1‴ʺ, 1‴‴) is in said first configuration;
said centre of gravity (W) being arranged inside said first trapezium (U).

3. Aircraft according to claim 2, **characterised in that** said first trapezium (U) is isosceles with:
- a longer base defined by a first segment joining said seventh and eighth axis (F, G); and
- a shorter base defined by a segment joining said third and fourth axis (B, C).

4. Aircraft according to any one of the preceding claims, **characterised in that** said third and fourth axis (B, C) are arranged in front of said seventh and eighth axis (F, G) in said first configuration, proceeding from said tail (5) towards said nose (4) along said first axis (Y).

5. Aircraft according to any one of the preceding claims, **characterised in that** said third and fourth axis (B, C) are each interposed between a respective said seventh and eighth axis (F, G) and said first axis (Y), in said first configuration.

6. Aircraft according to any one of the preceding claims, **characterised in that** said fifth and sixth axis (D, E) extend behind said first trailing edge (25), and said third and fourth axis (B, C) extend in front of said first leading edge (28), proceeding from said tail (5) towards said nose (4) along said first axis (Y), when said aircraft (1, 1', 1", 1‴, 1ʺʺ, 1‴ʺ, 1‴‴) is in said first configuration.

7. Aircraft according to any one of the preceding claims, **characterised in that** said third, fourth, fifth and sixth axis (B, C, D, E) are fixed with respect to said structure (2).

8. Aircraft according to any one of the preceding claims, **characterised by** comprising a ninth and tenth rotor (24a‴‴, 24b‴‴) respectively rotatable around a eleventh and twelfth axis (L, M), respectively arranged on the side of said first and second sidewall (62) of said structure (2) and arranged behind said first trailing edge (25), proceeding from said tail (5) towards said nose (4) along said first axis (Y);
said eleventh and twelfth axis (L, M) being arranged behind said fourth and fifth axis (D, E), proceeding from said tail (5) towards said nose (4) along said first axis (Y);
said fifth and sixth axis (D, E) being interposed between said eleventh and twelfth axis (L, M) along said further axis (X);
the traces of said fifth, sixth, eleventh and twelfth axes (D, E, L, M) defining the vertices of a second isosceles trapezium (U‴, U‴‴) in the plane define by said first axis (Y) and by said second axis (X) when said aircraft (1‴‴) is in said first configuration;
said first axis (Y) being an axis of symmetry of said second trapezium (U‴, U‴‴); and/or
**characterised in that** the traces of said fifth, sixth, seventh and eighth axis (D, E, F, G) define the vertices of a third isosceles trapezium (Uʺʺ) in said plane defined by said first axis (Y) and by said second axis (X) when said aircraft (1‴) is in said first configuration;
said first axis (Y) being an axis of symmetry of said second trapezium (Uʺʺ).

9. Aircraft according to any one of claims 1 to 6 or 8, **characterised in that** said fifth and sixth axis (D, E) are inclinable with respect to said structure (2);
said fifth and sixth axis (D, E) being arranged orthogonal to said first axis (Y), in said first hovering or taking off/landing flight configuration;
said fifth and sixth (D, E) being arranged parallel or inclined with respect to said first axis (Y), in said second forward flight configuration.

10. Aircraft according to any one of the preceding claims, **characterised by** further comprising:
- a tail surface (8‴ʺʺ) generating, in use, a second lift/downforce value, and arranged behind said half-wings (3) proceeding from said tail (5) towards said nose (4) along said first axis (Y);
- a first support beam (30) supporting said first and third rotor (20a, 21a); and
- a second support beam (31) supporting said second and fourth rotor (20b, 21b);
said tail surface (8‴‴) extending between said first support beam (30) and second support beam (31).

11. Aircraft according to any one of the preceding claims, **characterised by** further comprising a pair of aerodynamic surfaces (9) arranged on respective mutually opposite sidewalls (62) of said structure (2) and generating, in use, a third lift/downforce value; said aerodynamic surfaces (9) each comprising a respective second leading edge (26) and a respective second trailing edge (27); said aerodynamic surfaces (9) being arranged in front of said half-wings (3), proceeding from said tail (5) towards said nose (4) along said first axis (Y);
said seventh and eighth rotor (23a, 23b) being carried by respective said aerodynamic surfaces (9).

12. Aircraft according to claim 11, **characterised in that** said ninth and tenth axis (I, J) of respective said seventh and eighth rotor (23a, 23b) are arranged in front of said second leading edges (26), proceeding from said tail (5) towards said nose (4) along said first axis (Y).

13. Aircraft according to any one of the preceding claims, **characterised in that** said ninth and tenth axis (I, J) and/or said seventh and eighth axis (F, G) are inclinable with respect to said structure (2), and arranged transversely to said first axis (Y) in said first hovering or taking off/landing flight configuration and parallel to said first axis (Y) in said second forward flight configuration.

14. Aircraft according to any one of claims 9 to 13, **characterised in that**, in said plane defined by said first axis (Y) and secondo axis (X) and when said aircraft (1, 1', 1", 1‴, 1ʺʺ, 1‴ʺ, 1‴‴) is in said first configuration:
- said second, fourth and eighth axis (B, D, I) are aligned parallel to said first axis (A); and
- said third, fifth and ninth axis (C, E, J) are aligned parallel to said first axis (Y).

15. Aircraft according to any one of the preceding claims, **characterised by** comprising a pair of fins (80'; 80‴‴) projecting cantilevered from respective ends (15) of corresponding half-wings (3); said ends (15) delimiting the corresponding said half-wings on the opposite side to said structure (2); and/or
**characterised in that** said half-wings (3) comprise respective elevons (85'); and/or
**characterised in that** said half-wings (3) have a negative deflection angle; and/or
**characterised in that** at least one of said first, second, third, fourth, fifth, sixth, seventh and eighth rotor (20a, 20b, 21a, 21b, 22a, 22b, 23a, 23b) has a fixed pitch; and/or
**characterised in that** at least one of said first, second, third, fourth, fifth, sixth, seventh and eighth rotor (20a, 20b, 21a, 21b, 22a, 22b, 23a, 23b) is operated electrically; and/or
**characterised in that** at least two between said first, second, third, fourth, fifth, sixth, seventh and eighth rotor (20a, 20b, 21a, 21b, 22a, 22b, 23a, 23b) are operable independently from one another so as to generate respective thrust values (T1, T2, T3, T4, T5, T6, T7, T8, T9, T10) independent from one another.

## Amended claims

### Amended claims in accordance with Rule 137(2) EPC.

1. Convertible aircraft (1, 1', 1" , 1‴, 1‴ʺ, 1‴‴) comprising:
- a structure (2) defining a first longitudinal axis (Y) of said aircraft (1, 1', 1'', 1‴, 1‴ʺ, 1‴‴, 1‴ʺʺ) and a second axis (X) transverse to said first axis (Y); said structure (2) comprising, in turn, a nose (4) and a tail (5);
- a pair of half-wings (3) arranged on respective mutually opposite sidewalls (62) of said structure (2) and generating, in use, a first lift or downforce value; said half-wings (3) each comprising a respective first leading edge (28) and a respective first trailing edge (25);
- a first and a second rotor (20a, 20b) respectively rotatable around a third and fourth axis (B, C), and;
- a third and a fourth rotor (21a, 21b) respectively rotatable around a fifth and sixth axis (D, E);
said third and fourth axis (B, C) being arranged respectively on the mutually opposite sides of a first and a second sidewall (62) of said structure (2) symmetrically with respect to said first axis (Y);
said fifth and sixth axis (D, E) being arranged respectively on the side of said first and second sidewall (62) of said structure (2);
said aircraft (1, 1', 1" , 1‴, 1‴ʺ, 1‴‴, 1‴ʺʺ) further comprising:
- a fifth and a sixth rotor (22a, 22b) carried by respective said half-wings (3) and respectively rotatable around a seventh and eighth axis (F, G) with respect to said structure (2);
- a seventh and eighth rotor (23a, 23b) respectively rotatable around a ninth and tenth axis (I, J); arranged respectively on the side of said first and second sidewall (62) of said structure (2);
said seventh and eighth axis (F, G) being arranged respectively on the side of said first and second sidewall (62) of said structure (2) symmetrically with respect to said first axis (Y);
said ninth and tenth axis (I, J) being arranged respectively on the side of said first and second sidewall (62) of said structure (2) symmetrically with respect to said first axis (Y);
said aircraft (1, 1', 1" , 1‴, 1‴ʺ, 01‴‴) being switchable between:
- a first hovering or taking off/landing flight configuration wherein at least two between said seventh and eighth axis (F, G) and said ninth and tenth axis (I, J) are arranged transversely to said first axis (Y); and
- a second forward flight configuration wherein said at least two between said seventh and eighth axis (F, G) and said ninth and tenth axis (I, J) are arranged parallel with respect to said first axis (Y);
said seventh and eighth axis (F, G) being arranged, when said aircraft (1, 1', 1'', 1‴, 1‴ʺ, 1‴‴, 1‴ʺʺ) is in said first configuration, offset with respect to said third and fourth axis (B, C) along said first axis (Y);
said aircraft (1, 1', 1" , 1‴, 1‴ʺ, 1‴‴, 1‴ʺʺ) comprising a centre of gravity (W) interposed along said first axis (Y) between said seventh and eighth axis (F, G) and said third and fourth axis (B, C), when said aircraft (1, 1', 1" , 1‴, 1‴ʺ, 1‴‴,1‴ʺʺ) is in said first configuration; **characterized in that** said fifth and sixth rotors (22a, 22b) are inclinable with respect to a further axis (H) between a respective first position assumed when said aircraft (1) is in said first configuration, and a respective second position assumed when said aircraft (1) is in said second configuration; said third and fourth rotor (21a, 21b) being supported by respective said half-wings (3);
said fifth and sixth rotors (22a, 22b) being supported by respective said half-wings (3).

2. Aircraft according to claim 1, **characterised in that** the traces of said seventh, eighth, third and fourth axis (F, G, B, C) define the vertices of a first trapezium (U) in a plane defined by said first axis (Y) and said second axis (X), when said aircraft (1, 1', 1'', 1‴, 1‴ʺ, 1‴‴) is in said first configuration;
said centre of gravity (W) being arranged inside said first trapezium (U).

3. Aircraft according to claim 2, **characterised in that** said first trapezium (U) is isosceles with:
- a longer base defined by a first segment joining said seventh and eighth axis (F, G); and
- a shorter base defined by a segment joining said third and fourth axis (B, C).

4. Aircraft according to any one of the preceding claims, **characterised in that** said third and fourth axis (B, C) are arranged in front of said seventh and eighth axis (F, G) in said first configuration, proceeding from said tail (5) towards said nose (4) along said first axis (Y).

5. Aircraft according to any one of the preceding claims, **characterised in that** said third and fourth axis (B, C) are each interposed between a respective said seventh and eighth axis (F, G) and said first axis (Y), in said first configuration.

6. Aircraft according to any one of the preceding claims, **characterised in that** said fifth and sixth axis (D, E) extend behind said first trailing edge (25), and said third and fourth axis (B, C) extend in front of said first leading edge (28), proceeding from said tail (5) towards said nose (4) along said first axis (Y), when said aircraft (1, 1', 1", 1‴, 1‴ʺ, 1‴‴) is in said first configuration.

7. Aircraft according to any one of the preceding claims, **characterised in that** said third, fourth, fifth and sixth axis (B, C, D, E) are fixed with respect to said structure (2).

8. Aircraft according to any one of the preceding claims, **characterised by** comprising a ninth and tenth rotor (24a‴‴, 24b‴‴) respectively rotatable around a eleventh and twelfth axis (L, M), respectively arranged on the side of said first and second sidewall (62) of said structure (2) and arranged behind said first trailing edge (25), proceeding from said tail (5) towards said nose (4) along said first axis (Y);
said eleventh and twelfth axis (L, M) being arranged behind said fourth and fifth axis (D, E), proceeding from said tail (5) towards said nose (4) along said first axis (Y);
said fifth and sixth axis (D, E) being interposed between said eleventh and twelfth axis (L, M) along said further axis (X); the traces of said fifth, sixth, eleventh and twelfth axes (D, E, L, M) defining the vertices of a second isosceles trapezium (U‴, U‴‴) in the plane define by said first axis (Y) and by said second axis (X) when said aircraft (1‴‴) is in said first configuration;
said first axis (Y) being an axis of symmetry of said second trapezium (U‴, U‴‴); and/or
**characterised in that** the traces of said fifth, sixth, seventh and eighth axis (D, E, F, G) define the vertices of a third isosceles trapezium (Uʺʺ) in said plane defined by said first axis (Y) and by said second axis (X) when said aircraft (1‴) is in said first configuration;
said first axis (Y) being an axis of symmetry of said second trapezium (Uʺʺ).

9. Aircraft according to any one of claims 1 to 6 or 8, **characterised in that** said fifth and sixth axis (D, E) are inclinable with respect to said structure (2);
said fifth and sixth axis (D, E) being arranged orthogonal to said first axis (Y), in said first hovering or taking off/landing flight configuration;
said fifth and sixth (D, E) being arranged parallel or inclined with respect to said first axis (Y), in said second forward flight configuration.

10. Aircraft according to any one of the preceding claims, **characterised by** further comprising:
- a tail surface (8‴ʺʺ) generating, in use, a second lift/downforce value, and arranged behind said half-wings (3) proceeding from said tail (5) towards said nose (4) along said first axis (Y);
- a first support beam (30) supporting said first and third rotor (20a, 21a); and
- a second support beam (31) supporting said second and fourth rotor (20b, 21b);
said tail surface (8‴‴) extending between said first support beam (30) and second support beam (31).

11. Aircraft according to any one of the preceding claims, **characterised by** further comprising a pair of aerodynamic surfaces (9) arranged on respective mutually opposite sidewalls (62) of said structure (2) and generating, in use, a third lift/downforce value; said aerodynamic surfaces (9) each comprising a respective second leading edge (26) and a respective second trailing edge (27); said aerodynamic surfaces (9) being arranged in front of said half-wings (3), proceeding from said tail (5) towards said nose (4) along said first axis (Y) ;
said seventh and eighth rotor (23a, 23b) being carried by respective said aerodynamic surfaces (9).

12. Aircraft according to claim 11, **characterised in that** said ninth and tenth axis (I, J) of respective said seventh and eighth rotor (23a, 23b) are arranged in front of said second leading edges (26), proceeding from said tail (5) towards said nose (4) along said first axis (Y).

13. Aircraft according to any one of the preceding claims, **characterised in that** said ninth and tenth axis (I, J) and/or said seventh and eighth axis (F, G) are inclinable with respect to said structure (2), and arranged transversely to said first axis (Y) in said first hovering or taking off/landing flight configuration and parallel to said first axis (Y) in said second forward flight configuration.

14. Aircraft according to any one of claims 9 to 13, **characterised in that**, in said plane defined by said first axis (Y) and secondo axis (X) and when said aircraft (1, 1', 1" , 1‴, 1‴ʺ, 1‴‴) is in said first configuration:
- said second, fourth and eighth axis (B, D, I) are aligned parallel to said first axis (A); and
- said third, fifth and ninth axis (C, E, J) are aligned parallel to said first axis (Y).

15. Aircraft according to any one of the preceding claims, **characterised by** comprising a pair of fins (80'; 80‴‴) projecting cantilevered from respective ends (15) of corresponding half-wings (3); said ends (15) delimiting the corresponding said half-wings on the opposite side to said structure (2); and/or
**characterised in that** said half-wings (3) comprise respective elevons (85'); and/or
**characterised in that** said half-wings (3) have a negative deflection angle; and/or
**characterised in that** at least one of said first, second, third, fourth, fifth, sixth, seventh and eighth rotor (20a, 20b, 21a, 21b, 22a, 22b, 23a, 23b) has a fixed pitch; and/or
**characterised in that** at least one of said first, second, third, fourth, fifth, sixth, seventh and eighth rotor (20a, 20b, 21a, 21b, 22a, 22b, 23a, 23b) is operated electrically; and/or
**characterised in that** at least two between said first, second, third, fourth, fifth, sixth, seventh and eighth rotor (20a, 20b, 21a, 21b, 22a, 22b, 23a, 23b) are operable independently from one another so as to generate respective thrust values (T1, T2, T3, T4, T5, T6, T7, T8, T9, T10) independent from one another.
